# EUROPEAN PATENT APPLICATION

(11) **EP 2 431 898 A1**
(43) Date of publication of application: **21.03.2012**
(21) Application number: 11180324.3
(22) Date of filing: 07.09.2011
(51) Int. Cl.: G06F 21/00, H04N 7/26, G06Q 30/00

(54) **Information processor, information processing method, and program**

(30) Priority: 17.09.2010 JP 2010209734
(71) Applicant: Sony Corporation, Tokyo 108-0075 (JP)
(72) Inventor: Kato, Motoki, Minato-ku, Tokyo 108-0075 (JP); Ueda, Kenjiro, Minato-ku, Tokyo 108-0075 (JP); Kobayashi, Yoshiyuki, Minato-ku, Tokyo 108-0075 (JP)
(74) Representative: Mills, Julia

(57) **Abstract**

An information processor includes a data processing portion which generates a content for delivery to a client. The data processing portion generates and provides a sub-content in which identification information of a content delivery client is recorded in audio data or subtitle data and a main content formed of image data which is reproduced together with the audio data or the subtitle data to the client, and generates and records management information in which the identification information recorded in the sub-content is associated with client information of the content provision destination in a storage portion.

## Description

The present disclosure relates to an information processor, an information processing method, and a program. Particularly, the present disclosure relates to an information processor which is used in a system enabling the prevention or at least reduction of unfair use of contents and the tracking of the origins of illegally distributed contents, an information processing method, and a program.

Recently, data communication via the network such as internet becomes popular, and a lot of image data, music data, and the like are actively distributed via the network.

The makers or sellers of a lot of contents such as music data and image data have the copyright, the right of distribution, and the like thereof. Accordingly, for example, when a service provider provides a content to users via the network from a server, use control is generally carried out to allow only users having a legal right of use to use the content.

Specifically, for example, a content is transmitted as an encrypted content, and control or the like is carried out to decrypt the content only by an encryption key which is provided to users who have performed a legal content purchase process. However, even when such a process is performed, the content is chaotically distributed when the user re-delivers the decrypted content via the network.

The present disclosure is contrived, for example, in view of the above-described problem, and it is desirable to provide an information processor enabling the specification of a distribution source of an illegally distributed content, an information processing method and a program.

Various respective aspects and features of the invention are defined in the appended claims. Combinations of features from the dependent claims may be combined with features of the independent claims as appropriate and not merely as explicitly set out in the claims.

According to a first embodiment of the present disclosure, there is provided an information processor including a data processing portion which generates a content for delivery to a client. The data processing portion generates and provides a sub-content in which identification information of a content delivery client is recorded in audio data or subtitle data and a main content formed of image data which is reproduced together with the audio data or the subtitle data to the client, and generates and records management information in which the identification information recorded in the sub-content is associated with client information of the content provision destination in a storage portion.

Furthermore, according to an embodiment of the information processor of the present disclosure, the data processing portion generates a sub-content in which identification information is recorded as digital watermark data in audio data or subtitle data.

Furthermore, according to an embodiment of the information processor of the present disclosure, the data processing portion acquires identification information which is included in audio data or subtitle data by a process of analyzing the audio data or the subtitle data included in a distributed content, and specifies a client as a content delivery destination by a process of matching the acquired identification information to information registered in the management information.

Furthermore, according to an embodiment of the information processor of the present disclosure, the data processing portion generates and provides a playlist file as a reproduction control information file for reproduction of the main content and the sub-content in parallel.

Furthermore, according to an embodiment of the information processor of the present disclosure, the data processing portion holds a plurality of different digital watermark-recorded contents in which digital watermark data different in the unit of segment which is partition data of audio data or subtitle data is recorded, and selects a different combination of segments in the unit of delivery process to the client from the plurality of different digital watermark-recorded contents to generate a sub-content formed of audio data or subtitle data in which a digital watermark data row in the unit of segment which is client identification information is set.

Furthermore, according to an embodiment of the information processor of the present disclosure, the data processing portion holds a plurality of different encrypted contents each formed of encrypted segments to which an encryption key different in the unit of segment which is partition data of the content is applied, and selects a combination of segments different in the unit of delivery process to the client from the plurality of different encrypted contents to provide the combination of segments to the client.

Furthermore, according to an embodiment of the information processor of the present disclosure, the data processing portion generates and records management information in which key information of the encryption key applied to the encrypted content which is provided to the client is associated with client information of the content provision destination in the storage portion.

Furthermore, according to an embodiment of the information processor of the present disclosure, the data processing portion specifies a client as a destination of the delivery of the content and the key by acquiring information on the distributed key and matching the acquired key information to information registered in the management information.

Furthermore, according to a second embodiment of the present disclosure, there is provided an information processor including a data processing portion which executes a content reproduction process. The data processing portion acquires a sub-clip file storing a sub-content in which identification information of a content delivery client is recorded in audio data or subtitle data and a main clip file storing a main content formed of image data which is reproduced together with the audio data or the subtitle data, and applies a playlist file which is a reproduction control information file for execution of a process of reproducing the main clip file and the sub-clip file in parallel to reproduce the image data and the audio data or the subtitle data in parallel.

According to a third embodiment of the present disclosure, there is provided an information processing method which is executed in an information processor. The method includes generating a sub-content in which identification information of a content delivery client is recorded in audio data or subtitle data and a main content formed of image data which is reproduced together with the audio data or the subtitle data by a data processing portion; providing the sub-content and the main content to the client; generating management information in which the identification information recorded in the sub-content is associated with client information of the content provision destination; and storing the management information in a storage portion.

According to a fourth embodiment of the present disclosure, there is provided a program enabling an information processor to execute information processing. The program allows a data processing portion to generate and provide a sub-content in which identification information of a content delivery client is recorded in audio data or subtitle data and a main content formed of image data which is reproduced together with the audio data or the subtitle data to the client, and to generate and record management information in which the identification information recorded in the sub-content is associated with client information of the content provision destination in a storage portion.

The program of the present disclosure is a program which can be provided to, for example, an information processor or a computer system capable of executing various programs and codes by a computer-readable storage medium or communication medium. When such a program is provided in a computer-readable form, a process according to the program is realized on an information processor or a computer system.

Other objects, characteristics, and advantages of the present disclosure will be further described in detail on the basis of embodiments of the present disclosure and the accompanying drawings. In the present disclosure, the system is a logical collective configuration of a plurality of devices, and the respective constituent devices may not be disposed in the same housing.

According to the configuration of an embodiment of the present disclosure, there is provided a configuration enabling, from an illegally distributed content, the verification of the origin thereof. A sub-content in which identification information of a content delivery client is recorded as, for example, a digital watermark in audio data or subtitle data, and a main content formed of image data which is reproduced together with the audio or the subtitle as the sub-content are generated and provided to the client. Furthermore, management information in which the identification information recorded in the sub-content is associated with client information of the content provision destination is generated to perform the management. When an illegally distributed content is found, the identification information recorded in the audio or the subtitle which is included in the illegally distributed content is analyzed and matched to data registered in the management information, and thus the delivery source can be determined.

Embodiments of the invention will now be described with reference to the accompanying drawings, throughout which like parts are referred to by like references, and in which:
Fig. 1 is a diagram illustrating the outline according to an embodiment of the present disclosure.
Fig. 2 is a diagram illustrating the configuration of a server which generates a content which is provided to a client and a process thereof.
Fig. 3 is a diagram illustrating a content delivery process using a CDN.
Fig. 4 is a diagram illustrating an example of a content reproduction process in a client.
Fig. 5 is a diagram illustrating an example of a content reproduction process using a playlist file.
Fig. 6 is a diagram illustrating an example of a process of recording an identifier (ID) as a digital watermark.
Fig. 7 is a diagram illustrating a specific example of a digital watermark-recorded content.
Fig. 8 is a diagram illustrating a specific example of digital watermark data including a unique ID in the unit of content.
Fig. 9 is a diagram illustrating a specific example of digital watermark data including a unique ID, a MAC, and an ECC in the unit of content.
Fig. 10 is a diagram illustrating an example of the data configuration of management information which is held in a storage section of the server.
Fig. 11 is a diagram illustrating an example of a process of generating and providing an encrypted content using an encryption key different in the unit of client or in the unit of delivery process.
Fig. 12 is a diagram illustrating an example of a process of generating and providing an encrypted content using an encryption key different in the unit of client or in the unit of delivery process.
Fig. 13 is a diagram illustrating an example of the data configuration of management information which is held in the storage section of the server.
Fig. 14 is a diagram showing a flowchart illustrating a content generation processing sequence which is executed in the server by a service provider or the like.
Fig. 15 is a diagram showing a flowchart illustrating a content provision processing sequence which is executed in the server by a service provider or the like.
Fig. 16 is a diagram illustrating a content reproduction process in a client.
Fig. 17 is a diagram showing a flowchart illustrating an origin determination processing sequence which is executed when an illegally distributed content is found.
Fig. 18 is a diagram illustrating an example of the hardware configuration of the server.
Fig. 19 is a diagram illustrating an example of the hardware configuration of a client.

Hereinafter, an information processor, an information processing method, and a program according to an embodiment of the present disclosure will be described in detail with reference to the drawings. The description will be given in the following order.
1. Outline of Embodiment of Present Disclosure
2. Specific Example of Content Provision Process of Server
3. Content Delivery Process Using CDN
4. Content Reproduction Process in Client
5. Specific Example of Process of Recording Identifier (ID) in Sub-Content such as Audio or Subtitle
6. Example of Configuration of Content Encryption Process
7. Sequences of Content Generation and Provision in Server 7-1. Content Generation Processing Sequence in Server 7-2. Content Provision Processing Sequence in Server
8. Content Reproduction Sequence in Client
9. Origin Determination Processing Sequence based on Illegally Distributed Content in Server
10. Example of Hardware Configurations of Devices

### [1. Outline of Embodiment of Present Disclosure]

Hereinafter, an information processor, an information processing method, and a program according to an embodiment of the present disclosure will be described in detail with reference to the drawings.

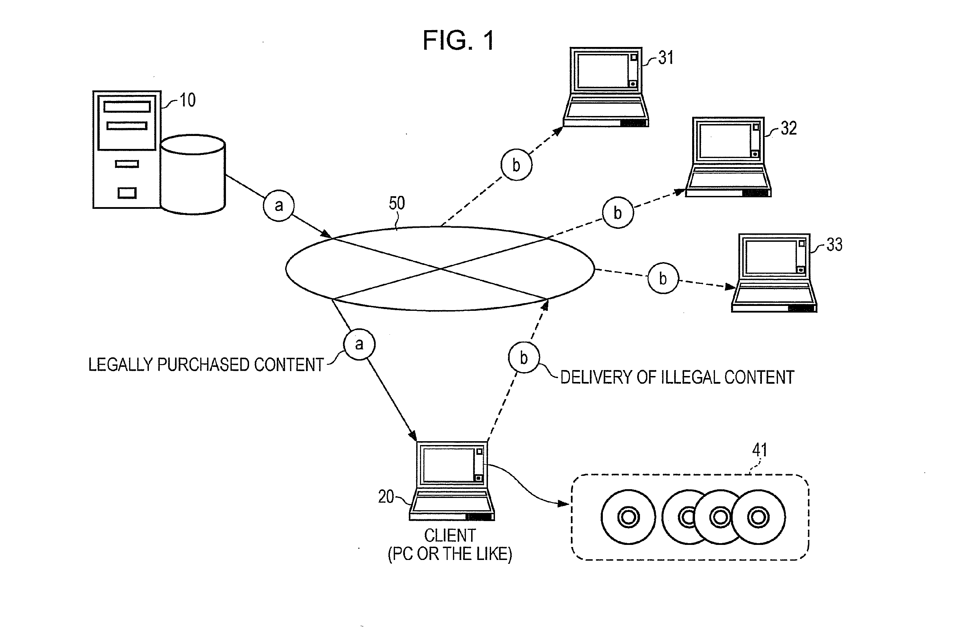

First, the outline according to an embodiment of the present disclosure will be described with reference to Fig. 1. According to the embodiment of the present disclosure, for example, it is possible to specify the source of an illegal content which is distributed on the network.

Fig. 1 shows a server 10 which is operated by a service provider providing contents such as movies and music.

A client 20 such as a PC accesses the server 10 and performs a legal content purchase procedure to acquire a content. The legal content is acquired via a route (a) on the network shown in Fig. 1.

A user of the client 20 is permitted to reproduce the legally purchased content under certain use restrictions. For example, even when the distributed content is an encrypted content, the legal purchaser can decrypt and reproduce the encrypted content by applying a key which is provided from the server or a decryption key which is retained in advance.

However, the user of the client server 20 may illegally provide the decrypted content to other users (users of clients 31 to 33 shown in the drawing) via the network. For example, the decrypted content may be provided to a large indefinite number of users via a route (b) on the network shown in Fig. 1.

Otherwise, in some cases, the user of the client 20 illegally records the decrypted content on a medium such as a disk and creates large amounts of illegal copy recording media to provide the media to other users. For example, disks 41 shown in Fig. 1 are used.

According to an embodiment of the present disclosure, when the distribution of such an illegal content is detected, the origin of the illegal content can be specified. In Fig. 1, the origin is the client 20.

### [2. Specific Example of Content Provision Process of Server]

As described above, according to an embodiment of the present disclosure, the origin of an illegal content can be traced, and in order to realize this process, the server 10 which provides legal contents performs a process of generating and providing a content having a particular configuration to the client. The server creates and provides a particular content for enabling the specification of a client or a user who illegally distributes the content to each of the clients.

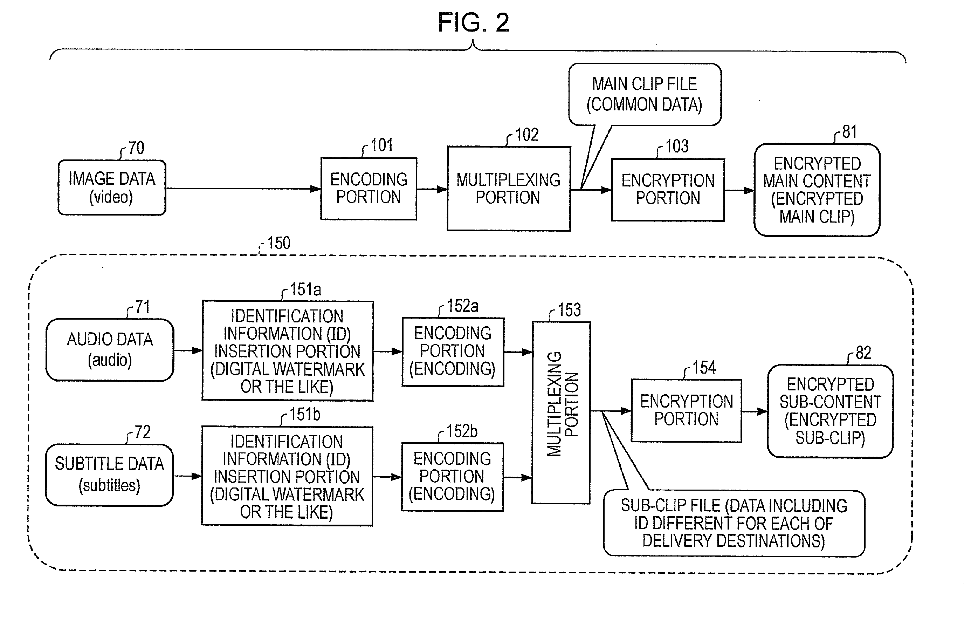

The configuration of the server which generates a content which is provided to the client and a process thereof will be described with reference to Fig. 2.

Fig. 2 is a diagram showing an example of the configuration of a data processing portion which executes a content generation process in the server.

Examples of the content include a movie content and the like, and the content is constituted of image data 70, audio data 71, and subtitle data 72.

The image data 70 is generated as data common to the clients, that is, common content.

At least one of the audio data 71 and the subtitle data 72 has identification information (unique ID) for identification of a content delivery client recorded therein, and is thus generated as individual data in the unit of client.

The image data 70 is input to an encoding portion 101 to be subjected to an encoding process (encoding) such as MPEG compression in the encoding portion 101.

Furthermore, if necessary, the image data 70 is multiplexed with other data which is reproduced together with the image data in a multiplexing portion 102, and thus a main clip file storing the image data is generated.

Next, the main clip file is input to an encryption portion 103 to be encrypted.

The encrypted clip file is an encrypted main content (encrypted main clip) 81 shown in the drawing.

This encrypted main content (encrypted main clip) 81 is provided to each of the clients as data common to the clients.

At least one of the audio data 71 and the subtitle data has identification information (unique ID) for identification of a content delivery client recorded therein and is thus generated as individual data in the unit of client.

The audio data 71 and the subtitle data 72 are input to identification information (ID) insertion portions 151a and 151b, respectively.

The identification information (ID) insertion portion 151a performs a process of recording ID information for identifying a client which is a content delivery destination in the audio data 71. For example, constituent bits of a client ID are recorded as digital watermark data in an audio signal.

The identification information (ID) insertion portion 151b performs a process of recording ID information for identifying a client which is a content delivery destination in the subtitle data 72. For example, constituent bits of a client ID are recorded as digital watermark data in a subtitle signal.

Both of the ID recording process for the audio data 71 in the identification information (ID) insertion portion 151a and the ID recording process for the subtitle data 72 in the identification information (ID) insertion portion 151b may be executed. However, only one of them may be executed.

A specific example of the recording of digital watermark data in content data will be described later.

Thereafter, the audio data and the subtitle data are subjected to an encoding process such as compression in encoding portions 152a and 152b, respectively. Furthermore, if necessary, the audio data and the subtitle data are multiplexed with other data in a multiplexing portion 153, and thus a sub-clip file is generated.

The generated sub-clip file is encrypted in an encryption portion 154, and thus an encrypted sub-content (encrypted sub-clip) 82 is generated.

This encrypted sub-content 82 is not client common data. The encrypted sub-content 82 is generated individually in the unit of client or in the unit of delivery process and is provided to the clients.

The information on a client to which the sub-content 82 is provided is recorded and held as management information in the server. This management information will be described later.

The process shown by a dotted line frame 150 shown in Fig. 2 is a process in the unit of client or in the unit of content delivery, and is sequentially executed.

The following data generated by the server shown in Fig. 2, that is, (1) the encrypted main content (encrypted main clip) 81 and (2) the encrypted sub-content (encrypted sub-clip) 82 are provided to each of the clients.

As data which is provided to a client by the server, not only the encrypted main clip formed of the encrypted main content and the encrypted sub-clip formed of the encrypted sub-content, which have been described with reference to Fig. 2, but also other data is provided.

Specifically, a playlist file is provided in which reproduction control information which is used to reproduce a content to which the clips are applied is recorded. Furthermore, an encryption key and the like for decrypting the encrypted main clip or the encrypted sub-clip are provided to the client. A specific example of the encryption key will be described later.

### [3. Content Delivery Process Using CDN]

(1) The encrypted main content (encrypted main clip) 81 is provided as data common to the clients.
(2) The encrypted sub-content (encrypted sub-clip) 82 is provided to a client as client-specific data in which identification information different for each of the provision clients is recorded.

In order to efficiently deliver such client common data and client-specific data, for example, a Contents Distribution Network (CDN) using a plurality of cache servers is effectively used. When performing content delivery with the CDN applied thereto, efficient content delivery can be realized.

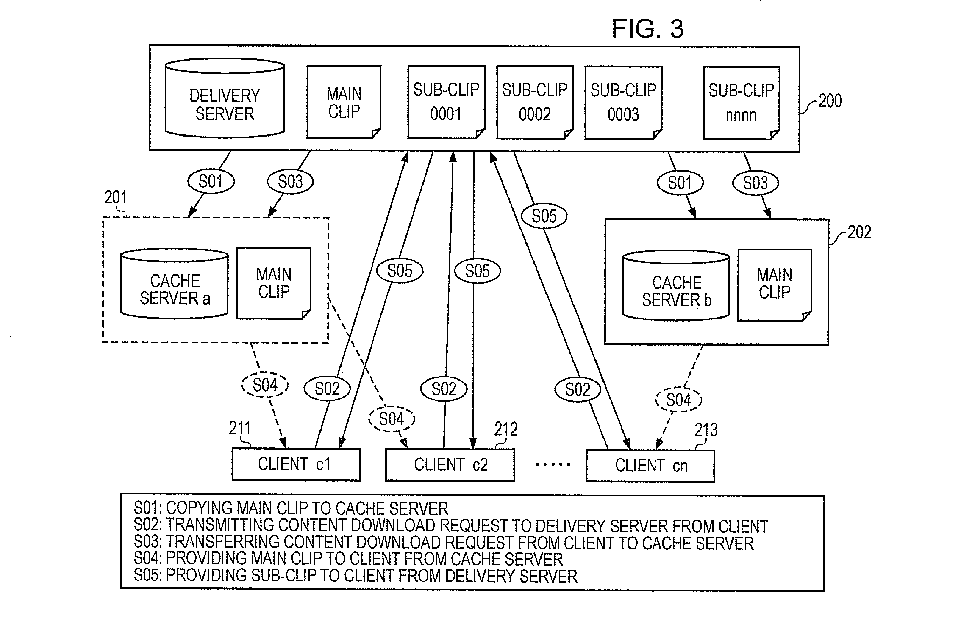

A content delivery process using the CDN will be described with reference to Fig. 3. Fig. 3 shows a delivery server 200, a cache server a, 201, a cache server b, 202, and clients c1, 211 to cn, 213.

The delivery server 200 is a server which is a content delivery source generating (1) the encrypted main content (encrypted main clip) 81 and (2) the encrypted sub-content (encrypted sub-clip) 82, which have been described with reference to Fig. 2.

The cache server a, 201 and the cache server b, 202 are, for example, cache servers each corresponding to a specific zone. Specifically, the cache server a, 201 and the cache server b, 202 are, for example, cache servers each corresponding to clients of a specific zone such as an Europe zone, a North America zone, or an Asia zone which is set in the unit of area. Otherwise, the cache server a, 201 and the cache server b, 202 are cache servers which are set by content type.

Fig. 3 shows the two cache servers, but the number of cache servers is arbitrary. A larger number of cache servers may be provided.

In the configuration shown in Fig. 3, a process of providing a content to the clients c1 to cn, 211 to 213 is performed in accordance with a sequence from Step S01 to Step S05 shown in the drawing.

First, in Step S01, the delivery server 200 provides copy data of a main clip to each of the cache servers and stores them in the cache servers.

The main clip corresponds to the main content 81 shown in Fig. 3 and is data which is provided commonly to all of the clients.

Next, in Step S02, the clients c1 to cn, 211 to 213 transmit a request for delivery (download) of the content to the delivery server 200.

Next, in Step S03, the delivery server 200 transfers the content delivery request from the client to the corresponding cache server.

For example, a content delivery request from a client in Europe is transferred to a cache server corresponding to the Europe zone, and a content delivery request from a client in Japan is transferred to a cache server corresponding to the Japan or Asia zone.

Next, in Step S04, the cache server which receives the content delivery request of the client from the delivery server provides the main clip, which has been received in advance from the delivery server 200, to the client.

Finally, in Step S05, the delivery server 200 generates a different sub-clip including a sub-content (audio or subtitle data) in which an identifier (ID) different in the unit of client (or in the unit of delivery) is recorded in the unit of client, and provides the sub-clip to each of the clients.

In the content delivery using a Contents Distribution Network (CDN), many cache servers are used, and thus a load of data delivery can be dispersed, and delivery delay and the like which occur by an increase in the processing load due to one specific server can be prevented.

In the process according to an embodiment of the present disclosure, the main clip is mainly delivered by the dispersed cache servers, and the sub-clip is delivered by the delivery server 200. However, the data amount of the sub-clip is small compared with the data amount of the entire content. Accordingly, the amount of data which is delivered to one client by the delivery server 200 is small, whereby even when the process for many clients is concentrated, the processing amount thereof is very small as compared with the process of delivering the entire content, and thus there is a low possibility of large delay.

### [4. Content Reproduction Process in Client]

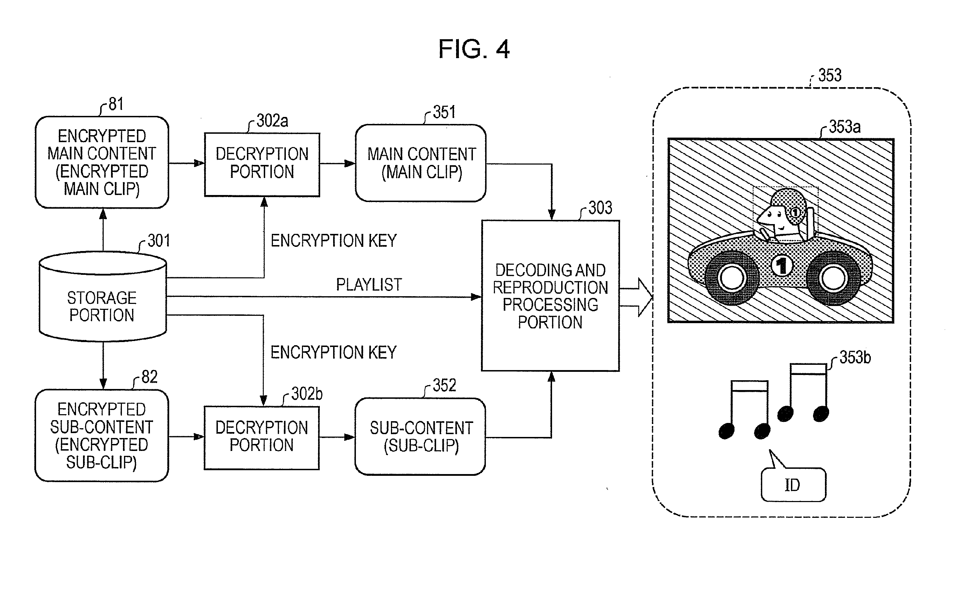

Next, an example of a content reproduction process in a client will be described with reference to Fig. 4 and the like.

As described with reference to Fig. 2, the server generates and provides (a) the encrypted main content (encrypted main clip) including the image and (b) the encrypted sub-content (encrypted sub-clip) including at least any of an audio and a subtitle to the client.

In at least any of the audio and the subtitle data included in the sub-content (sub-clip), an identifier (ID) different for each of the clients or for each of the delivery processes is recorded.

A client device, for example, a user PC receives these pieces of data from the server, stores the data in a recording medium such as a hard disk of the client (PC or the like), and executes a reproduction process.

As described above, the server transmits, other than an encrypted clip file, a playlist file as a reproduction control information file and a decryption key for the encrypted clip file to a client.

The client stores these received pieces of data in a storage portion, and reads out and reproduces these pieces of data from the storage portion.

Fig. 4 is a block diagram showing the configuration of the content reproduction process of a client such as a user's PC.

The encrypted main content (encrypted main clip) 81 and the encrypted sub-content (encrypted sub-clip) 82 are data received (downloaded) from the server and stored in a storage portion 301.

These pieces of data are subjected to a decryption process by using a decryption key in decryption portions 302a and 302b, respectively, and thus a decrypted main content (main clip) 351 and a decrypted sub-content (sub-clip) 352 are output. The key data is, for example, key data which is obtained with the content from the server.

These clips are decoded and reproduced in a decoding and reproduction processing portion 303. An example of a reproduction output image is reproduction data 353. The reproduction data 353 is constituted of image data 353a which is stored in the main clip as client common data, and audio or subtitle data 353b in which the client identification information is recorded. In the audio or subtitle data 353b, the configuration data of an identifier (ID) in the unit of client (or in the unit of delivery) is recorded as, for example, digital watermark data.

In the content reproduction process, the playlist file which is a reproduction control information file is used. This playlist file is a file which is received from the server together with the main clip and the sub-clip.

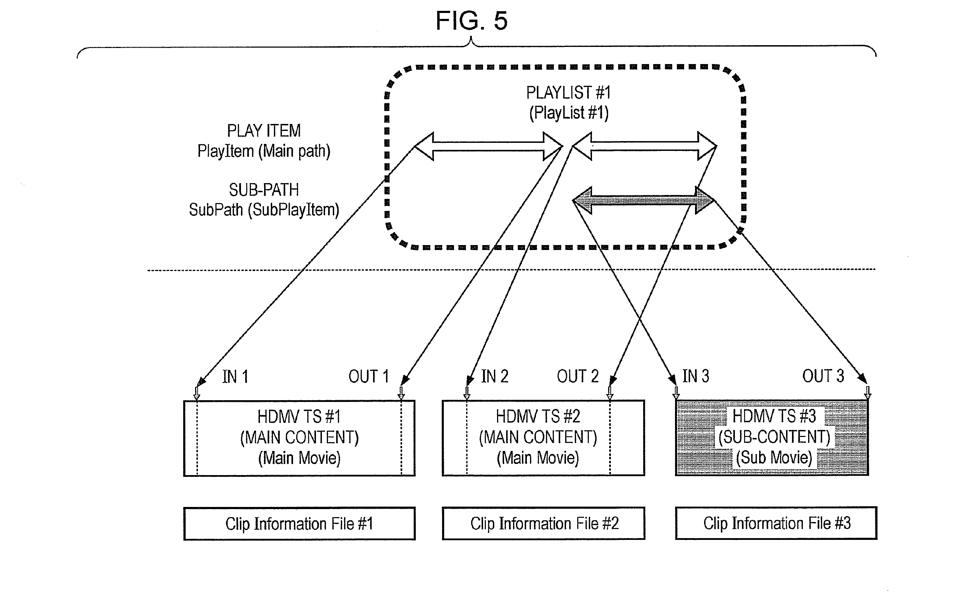

An example of the content reproduction process using a playlist file will be described with reference to Fig. 5.

A playlist file #1 shown in Fig. 5 has a configuration in which play items which have reproduction designation information showing a reproduction start position and an end position of clip information files of video contents, and a sub-path are set in parallel.

The play item is reproduction control information of the main content (main clip), and the path is reproduction control information corresponding to the sub-content (sub-clip).

The playlist file #1 shown in the drawing has a configuration in which only a play item is set in the early part of the playlist, and a play item and a sub-path are set in parallel in the latter part.

The playlist #1 shown in Fig. 5 shows an example in which two play items and one sub-path are set. However, the number of set play items and sub-paths is not limited to this example, and various settings can be made.

In the content reproduction process to which the playlist shown in Fig. 5 is applied, first, only one play item is used after start of the reproduction to execute the reproduction of the main content. Then, the paly item and the sub-path are applied, and thus a parallel reproduction of the main content and the sub-content is executed.

The sub-path is used as reproduction control information such as an audio and a subtitle which is reproduced together with the play item which is reproduction control information of the image.

In the process example shown in Fig. 5, the sub-path is a sub-path which is used as reproduction control information of the sub-clip file storing audio data or subtitle data.

The audio or the subtitle data as a sub-content is reproduced by the sub-path together with the reproduction of the image as a main content which is reproduced by the play item.

The main content is a content including image data common to all of the clients and users, and the sub-content is audio data or subtitle data in which an identifier (ID) corresponding to each client is recorded.

### [5. Specific Example of Process of Recording Identifier (ID) in Sub-Content such as Audio or Subtitle]

First, as described with reference to Fig. 2, the server generates a sub-content including audio data or subtitle data in which an identifier in the unit of client or in the unit of content delivery is recorded, and individually provides the sub-content to the client. This is because, one day, when a copy content and the like are illegally leaked, the analysis of the origin thereof using this identifier recorded in the audio data or the subtitle data can be performed.

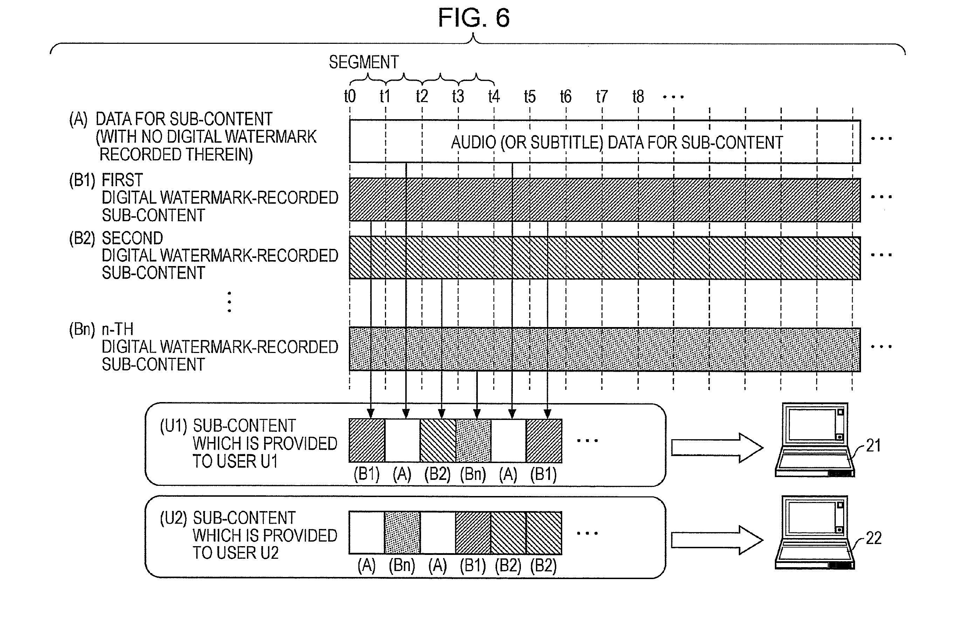

A specific example of a process of generating and providing a sub-content in which an identifier (ID) is recorded will be described with reference to Fig. 6 and the like. In the following process example, an example of the generation and provision of a sub-content in which an identifier (ID) using a digital watermark is recorded will be described.

The server generates data (A), (B1), ..., and (Bn) shown in Fig. 6 in advance.
(A) Data for a sub-content (audio data or subtitle data) (with no digital watermark recorded therein) is audio data or subtitle data of a content. However, no identifier using a digital watermark is embedded.

Reproduction times t0, t1, t2, ... arranged in the rightward direction in Fig. 6 correspond to a reproduction time of audio data or subtitle data.

In the following description, recording target data of identification information (ID) using a digital watermark is described as audio data. Subtitle data can also be processed in the same manner.

The server generates digital watermark-recorded sub-contents B1 to Bn shown in Fig. 6, in which specific bit information is recorded in this data A for a sub-content (audio data) (with no digital watermark recorded therein).
(B1) to (Bn) are sub-contents in which different pieces of digital watermark data are recorded, respectively. That is, the following plurality of digital watermark-recorded sub-contents are created by recording different digital watermark patterns in the (A) data for a sub-content (audio data).

The plurality of digital watermark-recorded contents, that is, (B1) the first digital watermark-recorded sub-content, (B2) the second digital watermark-recorded sub-content, ... and (Bn) the n-th digital watermark-recorded sub-content, are created.

In these (A) data for a sub-content (audio data) (with no digital watermark recorded therein), (B1) first digital watermark-recorded sub-content, (B2) second digital watermark-recorded sub-content, ... and (Bn) n-th digital watermark-recorded sub-content, divided segments are set. One segment includes audio data corresponding to a predetermined reproduction time.

For example, as shown in the drawing, a reproduction time from t0 to t1 corresponds to a first segment, a reproduction time from t1 to t2 corresponds to a second segment, and a reproduction time from t2 to t3 corresponds to a third segment, and in this manner, the contents (A) to (Bn) are divided into segments at the same sectioning positions (t0, t1, t2, ...).

The sectioning positions (t0, t1, t2, ...) of the contents (A) to (Bn) are at the same positions. However, the sizes of the segments such as the first segment, the second segment, and the third segment may not be uniform.

Furthermore, as shown in the lower part of Fig. 6, sub-contents to be provided to the users are generated by combining the sub-contents of (A) to (Bn) divided into the segments.

In the example shown in Fig. 6, (U1) a content which is provided to a user U1 is a sub-content which is configured to have a setting in which a segment of t0 to t1 corresponds to the first digital watermark-recorded sub-content B1, a segment of t1 to t2 corresponds to the sub-content A with no digital watermark recorded therein, a segment of t2 to t3 corresponds to the second digital watermark-recorded sub-content B2, a segment of t3 to t4 corresponds to the n-th digital watermark-recorded sub-content Bn, ....

The segment array of the content U1 which is provided to a user U1 is B1, A, B2, Bn, A, B1, ..., and the array in the unit of segment of the digital watermark bits in the array is 1, 0, 3, n, 0, 1, .... In addition, the digital watermark data of the sub-content A with no digital watermark recorded therein is interpreted as "0".

In this manner, by selecting the segments of the sub-contents A to Bn in the unit of segment each formed of reproduction audio data for a predetermined time, and by connecting the selected segments to each other, one sub-content for provision to the user is created, and thus a unique digital watermark data row in the unit of segment is set, whereby this digital watermark data row can be used as a client identifier.

A sub-content which is provided to a user U2 different from the user U1 is a sub-content which is configured to have a setting in which a segment of t0 to t1 corresponds to the sub-content A with no digital watermark recorded therein, a segment of t1 to t2 corresponds to the n-th digital watermark-recorded sub-content Bn, a segment of t2 to t3 corresponds to the sub-content A with no digital watermark recorded therein, a segment of t3 to t4 corresponds to the first digital watermark-recorded sub-content B1, ....

The content U2 which is provided to a user U2 has a segment array of (A), (Bn), (A), (B1), (B2), (B2), ..., and the array in the unit of segment of the digital watermark bits in the array is 0, n, 0, 1, 2, 2,

In this manner, the server creates and delivers the sub-contents employing a combination of the segments different for each of the sub-contents which are provided to the clients, whereby the sub-contents each formed of a different digital watermark array can be generated and provided.

Even when the segment combinations are different from each other, the sub-contents have the same audio main body data, and only the digital watermark data embedded in the contents is different. Accordingly, the reproduction contents of the users are the same. Also in the case of subtitle data, an ID using a digital watermark is recorded as a signal which is not visually observed by a user.

Clients 1 and 21 receive the "sub-content U1 which is provided to a user U1" from the server.

The clients 1 and 21 receive the main clip storing the main content common to the clients and the sub-clip storing the "sub-content U1 which is provided to a user U1".

The clients stores these received contents in a medium such as a hard disk, and then performs a process of reading-out and reproducing the contents from the hard disk.

In the content reproduction, the digital watermark data is a low-level signal which is not observed, and the user U1 can reproduce the contents without recognizing the recording of the digital watermark.

Clients 2 and 22 receive the "sub-content U2 which is provided to a user U2" having a segment array different from that of the "sub-content U1 which is provided to a user U1" via the network, and stores the received sub-content in a medium such as a hard disk.

The clients 2 and 22 also receive the main clip storing the main content common to the clients and the sub-clip storing the "sub-content U2 which is provided to a user U2".

Thereafter, the received contents are read out and reproduced from the hard disk. The user U2 can also reproduce the contents without recognizing the recording of the digital watermark.

In this manner, the server provides the respective delivery contents as contents which are set as all different combinations of segments to the respective users (clients).

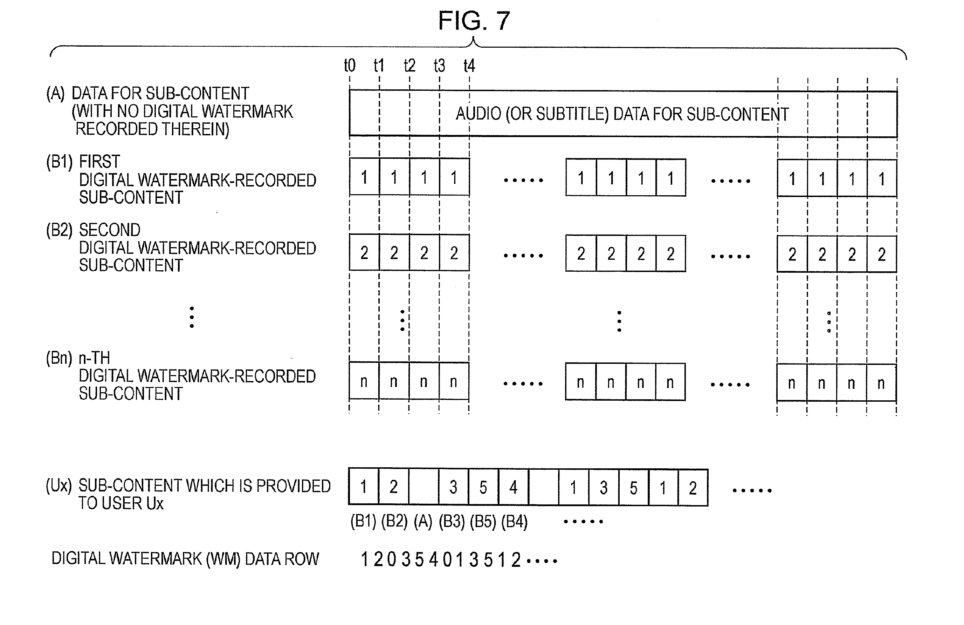

A specific example of the digital watermark-recorded content will be described with reference to Fig. 7.

In Fig. 7, as in Fig. 6, as data for content generation which is used to generate a sub-content which is provided to a client (user) by the server, a plurality of pieces of data, that is, data A for a sub-content (audio or subtitle data) (with no digital watermark recorded therein), a first digital watermark-recorded sub-content B1, a second digital watermark-recorded sub-content B2, ... and a n-th digital watermark-recorded sub-content Bn, are shown.

The digital watermark (WM)-recorded sub-contents B1 to Bn are set as a sub-content B1 in which data 1 is recorded as digital watermark data in each segment, a sub-content B2 in which data 2 is recorded as digital watermark data in each segment, ..., and a sub-content Bn in which data n is recorded as digital watermark data in each segment, and a sub-content in which digital watermark data having such a setting is recorded, respectively.

Various settings can be made as digital watermark embedding modes. For example, information on the presence or absence of the digital watermark and a lot of combination data of digital watermark data 1 to N are recorded in audio data which is included in one segment.

For example, information indicating the presence of the digital watermark and bit data 1 are recorded in an audio signal which is included in one segment (t0 to t1) of the first digital watermark-recorded sub-content B1. These pieces of data are difficult to discriminate during a reproduction time, and are minute-level data which can be detected by a digital watermark detection process.

In the example shown in Fig. 7, the first digital watermark-recorded sub-content B1 has a setting in which the same digital watermark data 1 is recorded in all the segments of the content, and the second digital watermark-recorded sub-content B2 has a setting in which the same digital watermark data 2 is recorded in all the segments of the content.

Similarly, an n-th digital watermark-recorded sub-content has a setting in which the same digital watermark data n is recorded in all the segments of the content.

The content provision server of a service provider or the like generates contents to be provided to the users by using a plurality of digital watermark-recorded contents having such a setting.

A sub-content Ux which is provided to a user Ux shown in Fig. 7 has a selection row of segments of (B1), (B2), (A), (B3), (B5), (B4), ..., and this content has a digital watermark data row of 1, 2, 0, 3, 5, 4, 0, ....

As described above, the segment of a sub-content having no digital watermark recorded therein is set to be interpreted when digital watermark information of data="0" is recorded.

A setting can also be made in which the segment of a content having no digital watermark recorded therein is not used.

As shown in Fig. 7, the n digital watermark-recorded sub-contents B1 to Bn are digital watermark-recorded sub-contents in which the same pieces of digital watermark data 1 to n are recorded in all the segments.

Delivery contents in which various different digital watermark data rows are set can be generated by combining these n kinds of digital watermark-recorded sub-contents B1 to Bn, or by combining and arranging these n kinds of digital watermark-recorded sub-contents and sub-contents having no digital watermark embedded therein in the unit of segment. These different digital watermark data rows are used as client identifiers or delivery processing identifiers.

The server generates and provides delivery contents having a segment array, that is, a digital watermark data row different for each new content delivery.

The server manages some pieces of data in the digital watermark data row which is included in the deliver content which is provided to a client (user) as a unique ID which is identification information corresponding to the delivery content.

This unique ID is registered and held as management information of the server.

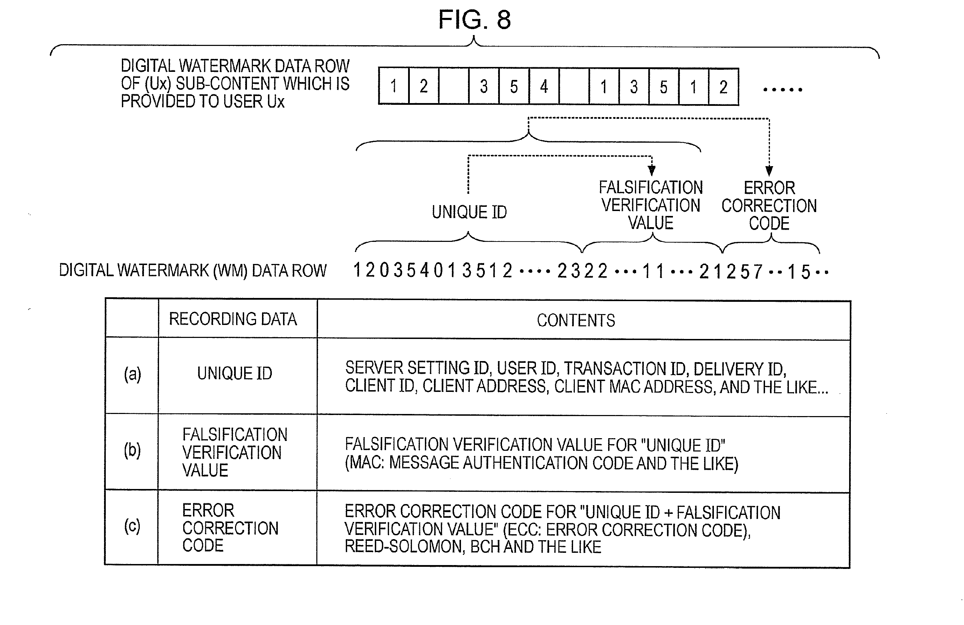

A specific example of the digital watermark data including a unique ID in the unit of delivery content will be described with reference to Fig. 8.

Fig. 8 shows a data row in a sub-content which is provided to a user Ux, which is the one user deliver content described with reference to Fig. 7.

(Ux) The data row of the digital watermark recorded in the sub-content which is provided to the user Ux is shown.

The digital watermark data row is a data row of 1203540 ....

This digital watermark data row includes data, that is, (1) a unique ID which is set in association with the sub-content, (2) an alteration verification value (MAC: Message Authentication Code) related to the unique ID, and (3) an error correction code related to the (unique ID and MAC value).

The data set of (1) to (3) is set in a repeated manner in one delivery content.

The unique ID is an ID allowing the respective delivery contents to be identified. This unique ID may be an ID which is generated by, for example, a random number generating process in the server delivering the contents, and as shown in Fig. 8, a user ID, a transaction ID, a delivery ID, a client device ID, a client address, a client MAC address and the like may be applied. The unique ID may be set as an ID allowing the respective delivery contents to be identified.

The alteration verification value is an alteration verification value related to the unique ID, and for example, a Message Authentication Code (MAC) is used.

The error correction code is an error correction code (ECC) related to the (unique ID and MAC value), and for example, data such as Reed Solomon or BCH is used.

First, the server which delivers contents including sub-contents determines a unique ID corresponding to a delivery content, and then calculates a MAC value corresponding to the delivery content. Furthermore, the server calculates an ECC related to the (unique ID+MAC).

A digital watermark data row is determined which matches a data row formed of the [unique ID/MAC/ECC] which is set as a result of the above calculation, and in accordance with the determined digital watermark data row, segments are sequentially selected from the contents described with reference to Figs. 6 and 7, that is, (A) the data for a sub-content (audio or subtitle data) (with no digital watermark recorded therein), (B1) the first digital watermark-recorded sub-content, (B2) the second digital watermark-recorded sub-content, ..., and (Bn) the n-th digital watermark-recorded sub-content to generate the delivery content.

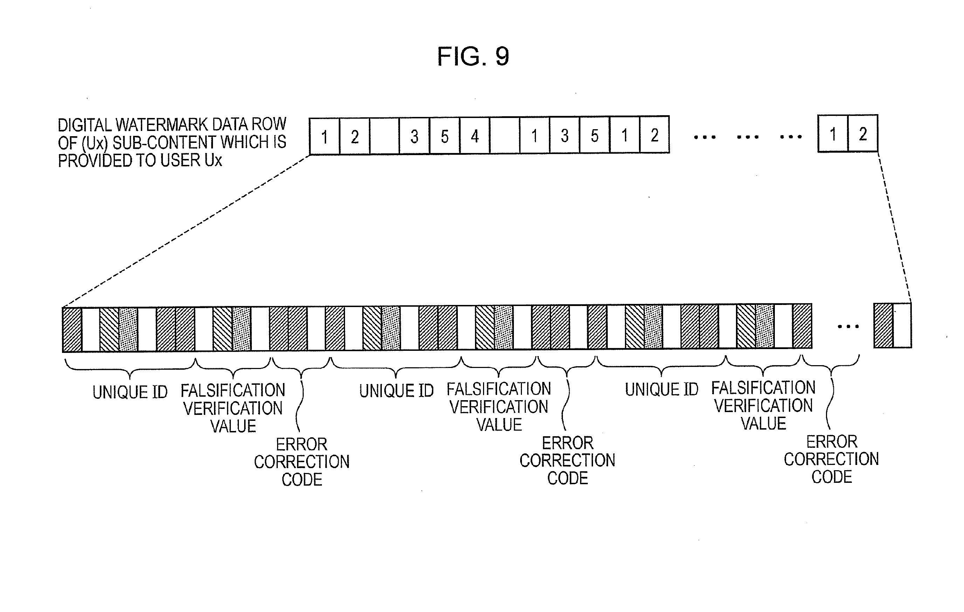

As shown in Fig. 9, in the sub-content, a data row formed of the [unique ID/MAC/EE] is set in a repeated manner.

The server which delivers contents including sub-contents records management information including the unique ID of the delivery content for each execution of content delivery in a storage section of the server.

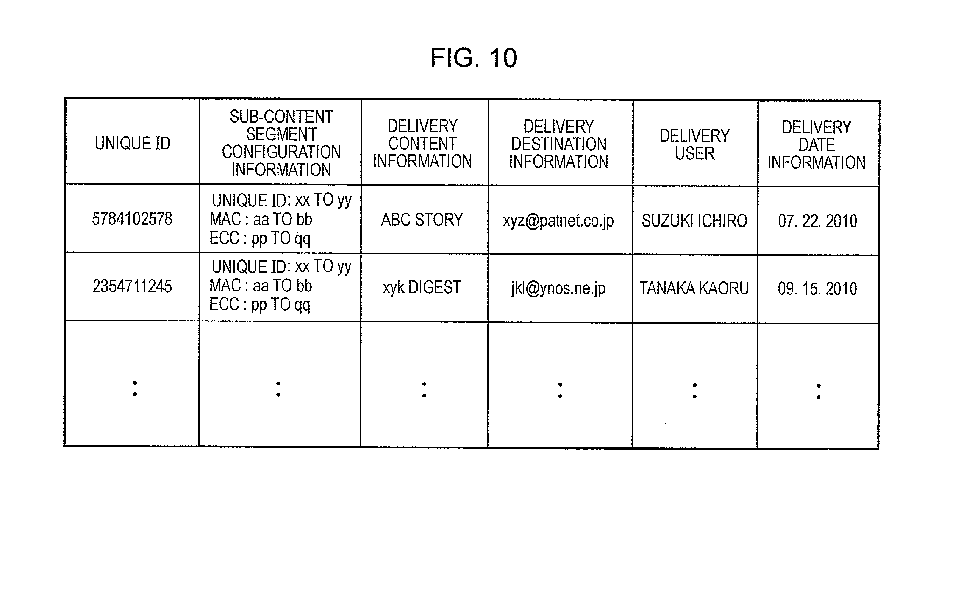

Fig. 10 shows an example of the data configuration of the management information which is held in the storage section of the server.

As shown in Fig. 10, the management information includes, for example, a unique ID corresponding to the delivery content, sub-content segment configuration information, delivery content information, delivery destination information, delivery user information, and delivery date information.

The sub-content segment configuration information is information showing where the unique ID, MAC, and ECC are recorded in the content configuration data. The sub-content segment configuration information is information showing which segments among the segments constituting the sub-content are a unique ID recording segment, a MAC recording segment, and an ECC recording segment.

Fig. 10 shows an example of the management information, and all these pieces of information may not be recorded. Information other than these pieces of information may be held as management information. The sub-content segment configuration information may not be set as registration information corresponding to the delivery content if it is delivered with a segment configuration which is set to have a unified data arrangement without changing for each delivery content.

However, the unique ID which is identification information and the information for specifying the delivery destination are registered in association with each other.

### [6. Example of Configuration of Content Encryption Process]

First, as described with reference to Fig. 2, the server which delivers contents generates and provides (a) an encrypted main content (encrypted main clip) including the image and (b) an encrypted sub-content (encrypted sub-clip) including at least any of an audio and a subtitle to the clients.

The main content is a content common to the clients, but the sub-content is a content in which identification information different for each of the clients is recorded.

Any of these contents is set as a clip file which is an individual, encrypted data file.

As an encryption key for a content which is provided to the clients, using the same encryption key is also possible, but different encryption keys may also be set and used in the unit of client or in the unit of delivery process.

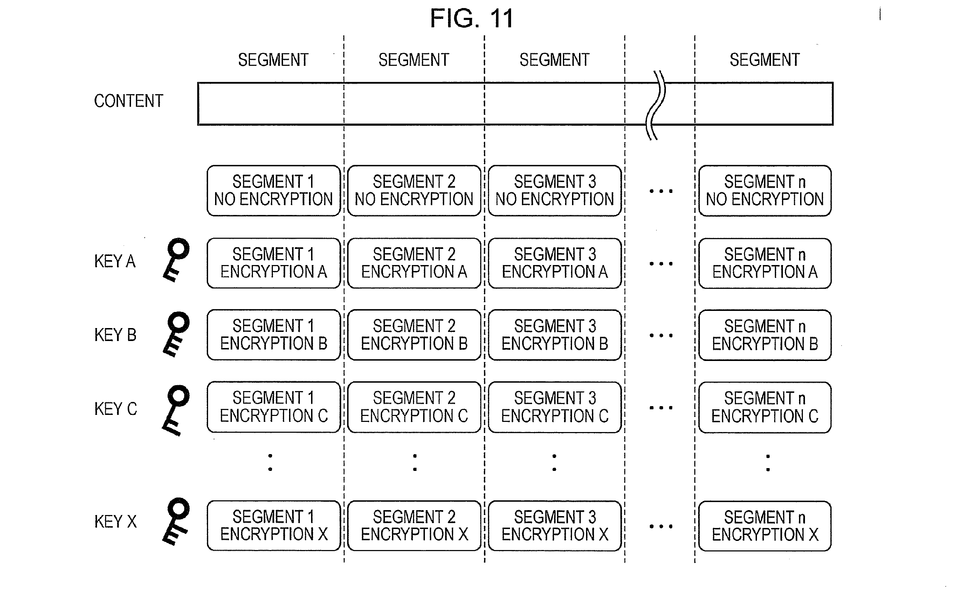

An example of a process of generating and providing an encrypted content using an encryption key different in the unit of client or in the unit of delivery process will be described with reference to Fig. 11 and the like.

Fig. 11 shows an example of content encryption in which an individual segment key is set as an encryption key in the unit of segment of a sub-content.

For example, an individual encryption key (segment key) is assigned to the same segment as the above-described digital watermark-recorded segment to execute the encryption in the unit of segment.

Regarding the segment setting, the digital watermark-recorded segment and the encrypted segment may be set to be common in the segment setting, and may also be different in the setting.

The server prepares many encryption keys (segment keys) in the unit of segment, which are applied to the encryption, and as shown in Fig. 11, generates in advance many encrypted contents formed of encrypted segments which are encrypted in the unit of segment by applying these keys.

As shown in Fig. 11, many kinds of sub-contents such as a sub-content which is constituted only of segments encrypted by a key A, a sub-content which is constituted only of segments encrypted by a key B, a sub-content which is constituted only of segments encrypted by a key C, ..., and a sub-content which is constituted only of segments encrypted by a key X, other than a sub-content which is constituted only of non-encrypted segments are prepared in advance.

When delivering the content, the server selects a combination of the encrypted segments different in the unit of delivery content, and generates and provides a sub-content formed of a set of the selected encrypted segments to the clients.

For example, a sub-content which is provided to a client C1 is a segment set using a key combination of a segment 1=segment 1 encrypted by an encryption key A, a segment 2=segment 2 encrypted by an encryption key B, and a segment 3=segment 3 encrypted by an encryption key C.

A sub-content which is provided to a client C2 is a segment set using a key combination of a segment 1=segment 1 encrypted by an encryption key E, a segment 2=segment 2 encrypted by an encryption key F, and a segment 3=segment 3 encrypted by an encryption key G.

In this manner, as shown in Fig. 11, the server creates in advance encrypted data in the unit of segment by applying the encryption keys A to X, and can generate a delivery content only by a process of combining the encrypted data in the delivery process. This is the same process as the process of generating a content including a different digital watermark data row which has been described with reference to Fig. 7.

By preparing in advance encrypted data in the unit of segment to which such a many keys are applied, it is possible to generate and provide a content to which a combination of different encryption keys is efficiently applied to the clients.

When such a content delivery is executed, the server provides the set of encryption keys, which is used in the segment encryption, to the clients together with the content.

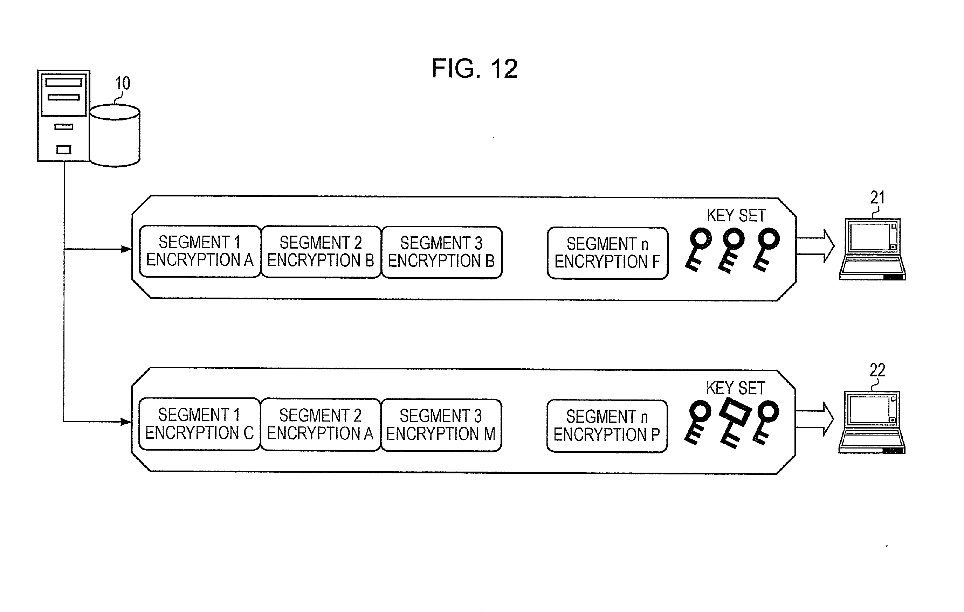

As shown in Fig. 12, contents in the unit of segment, specifically, a sub-content storing identification data using a digital watermark and a set of encryption keys which is applied to the encryption of the sub-content are transmitted to the respective clients.

Association information between the segment and the key showing which encryption key is applied to each segment is also provided.

When transmitting a sub-content to which encryption keys different in the unit of delivery content or in the unit of client are applied, the server also records key information applied to the respective clients as management information.

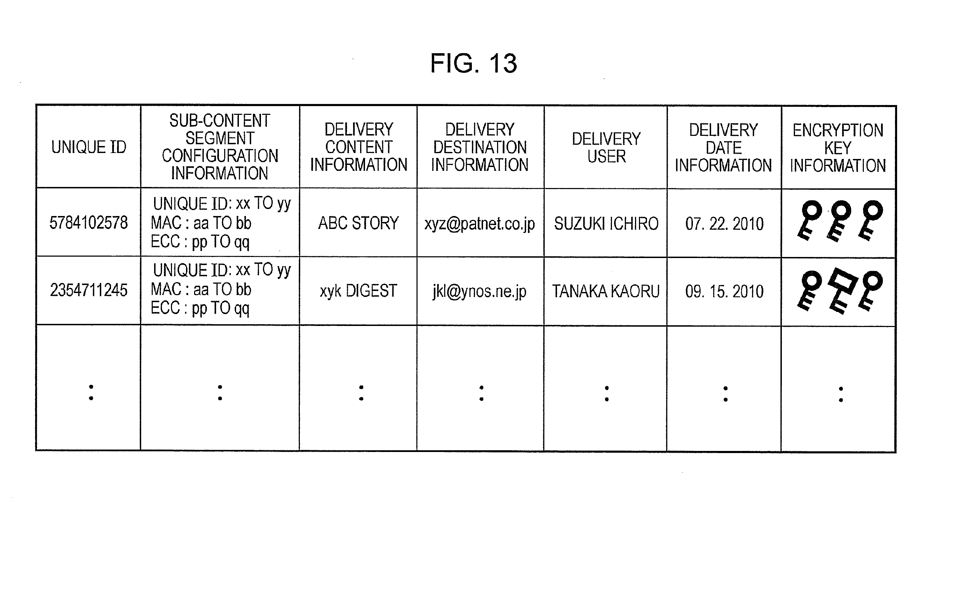

Fig. 13 shows an example of this management information. The management information shown in Fig. 13 has a configuration in which encryption key information is added to the management information described with reference to Fig. 10.

In the encryption key information, information of the encryption keys applied to the encryption process of the contents which are provided is recorded.

That is, encryption key information is recorded which is applied as the encryption key in the unit of segment described with reference to Fig. 11.

For example, as encryption key information applied to a sub-content which is provided to a client C1, encryption key information showing the use of a key combination of a segment 1=encryption key A, a segment 2=encryption key B, and a segment 3=encryption key C is recorded as management information in association with information on the delivery destination of the content.

In this manner, the key combination is set to be different in the unit of content, and thus, for example, when the leakage of a key occurs. The leaked key or a combination of the key is analyzed and matched to the management information shown in Fig. 13, whereby it is possible to estimate who is a client of the key leakage source.

### [7. Sequences of Content Generation and Provision in Server]

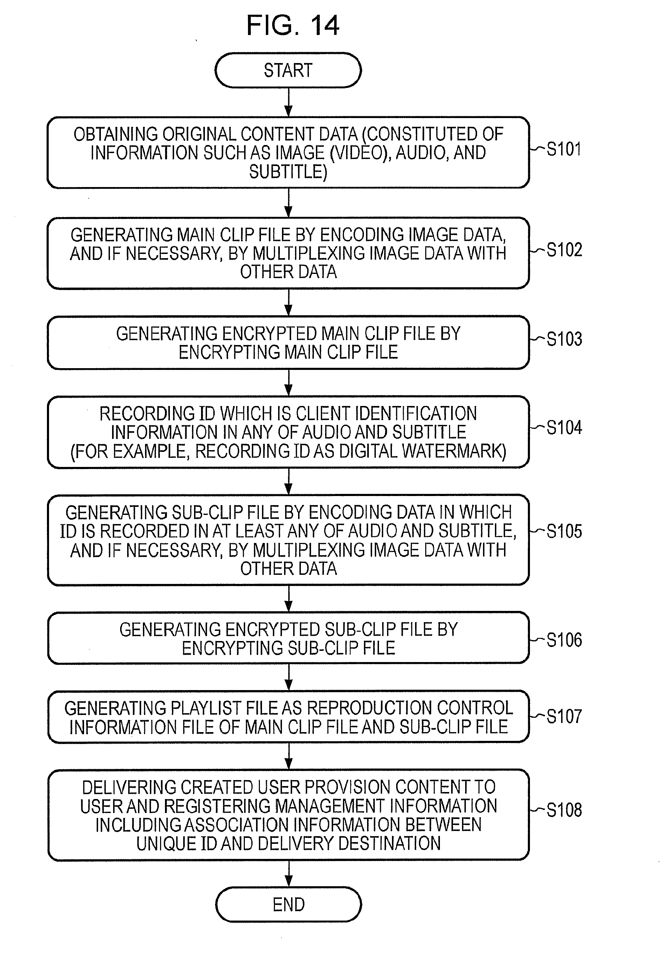

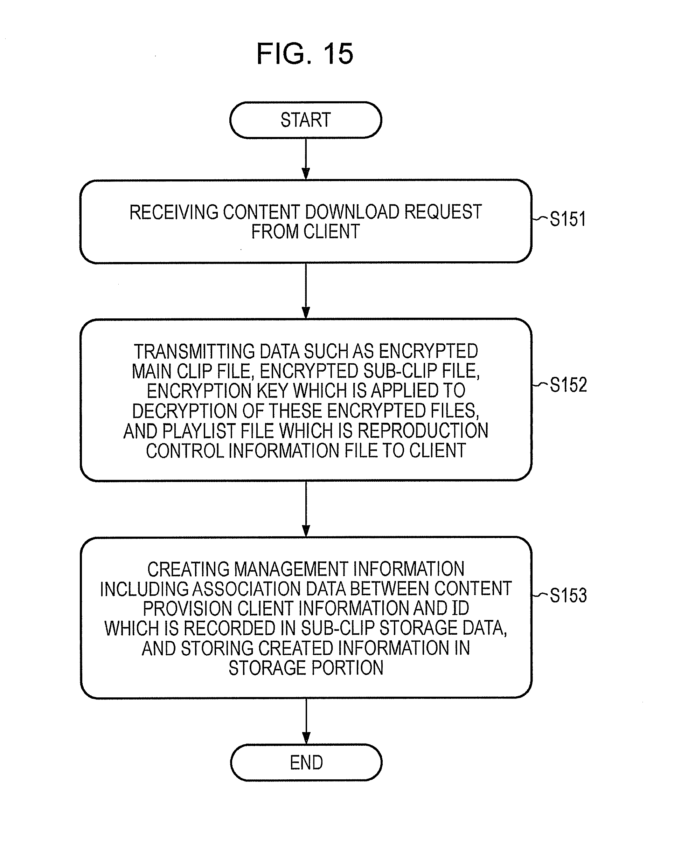

Sequences of content generation and provision which are executed in the server by a service provider or the like will be described with reference to the flowcharts shown in Figs. 14 and 15.

### (7-1. Content Generation Processing Sequence in Server)

First, a content generation processing sequence which is executed in the server by a service provider or the like will be described with reference to the flowchart shown in Fig. 14.

The process according to the flow shown in Fig. 14 is executed in the data processing portion of the server.

First, in Step S101, an original content is acquired which is constituted of data such as an image, audio, and a subtitle.

Next, in Step S102, the image data is encoded, and if necessary, is multiplexed with other data to generate a main clip file.

Next, in Step S103, the main clip file is encrypted to generate an encrypted main clip file.

Next, in Step S104, an ID which is client identification information is recorded (for example, recorded as a digital watermark) in at least any of the audio data or the subtitle data.

Next, in Step S105, the audio data or the subtitle data is encoded, and if necessary, is multiplexed with other data to generate a sub-clip file.

Next, in Step S106, the sub-clip file is encrypted to generate an encrypted sub-clip file.

Next, in Step S107, a playlist file is generated as a reproduction control information file of the main clip file and the sub-clip file.

Next, in Step S108, the created user provision content is delivered to a user, and management information including association information between the unique ID and the delivery destination is registered.

The data which is provided to the client is generated through these processes.

In the process of recording the ID which is client identification information as, for example, a digital watermark in Step S104, first, as described with reference to Figs. 6 and 7, pieces of digital watermark-recorded data in the unit of segment are combined, and thus a process of generating a various pieces of digital watermark data-recorded content can be executed.

In this Step S104, first, as described with reference to Figs. 8 and 9, the ID information may be recorded together with the alteration verification value and the error correction code.

In addition, in the encryption of the sub-clip file in Step S106, first, as described with reference to Fig. 11 and the like, an encryption process in which an encryption key different in the unit of client is applied by using an encryption key in the unit of segment.

### (7-2. Content Provision Processing Sequence in Server)

Next, a content provision processing sequence which is executed in the server by a service provider or the like will be described with reference to the flowchart shown in Fig. 15.

The process according to the flow shown in Fig. 15 is executed in the data processing portion of the server.

First, in Step S151, a content download request from a client is received.

Next, in Step S152, data such as an encrypted main clip file, an encrypted sub-clip file, an encryption key which is applied to the decryption of these encrypted files, and a playlist file which is a reproduction control information file is transmitted to the client.

Furthermore, in Step S153, management information including association data between the information of the content provision client and the ID recorded in audio data or subtitle data which is the sub-content is created and stored in the storage portion.

The management information in Step S153 is, for example, the management information described with reference to Fig. 10 or Fig. 13.

The management information is management information in which a unique ID which is client identification information and client information such as delivery destination information and delivery user information are associated with each other and recorded in the unit of content provided to each of the clients.

When different combinations of the encryption keys are made for each delivery content as described with reference to Figs. 11 and 12, key information is also recorded in the management information as described with reference to Fig. 13.

### [8. Content Reproduction Sequence in Client]

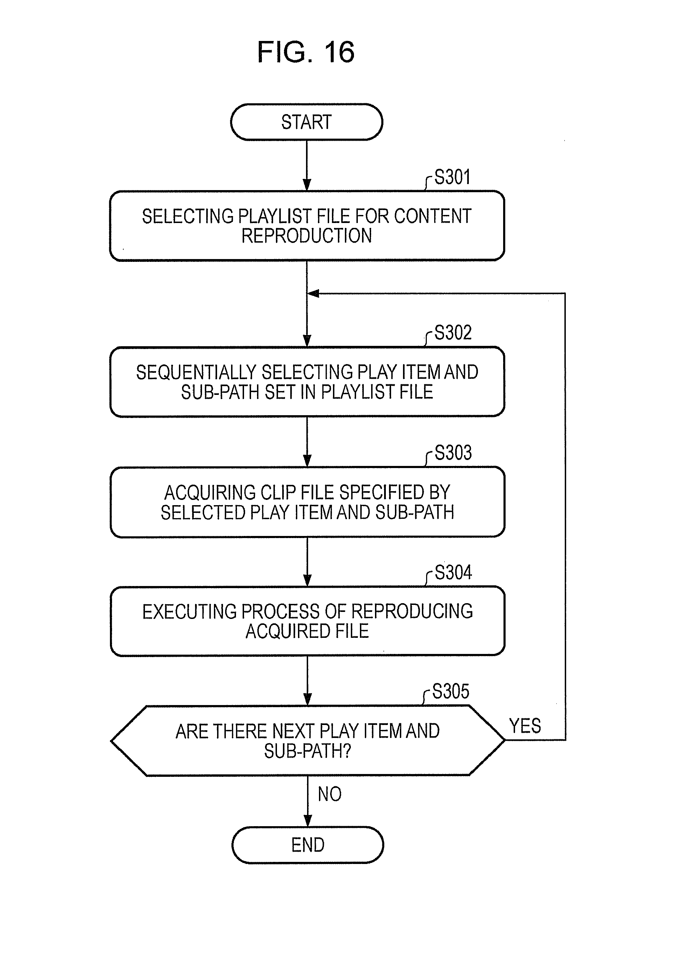

Next, a content reproduction processing sequence in a client will be described with reference to the flowchart shown in Fig. 16. This process is executed as a process of a data processing portion executing the reproduction process in a client device.

First, in Step S301, the client device executing the content reproduction process selects a playlist file for reproduction. This playlist file selection process is automatically selected in accordance with, for example, the title designation of the reproduction content.

Next, in Step S302, a play item and a sub-path set in the selected playlist file are sequentially selected. For example, a play item and a sub-path are selected from the top of the playlist file. When a user designates a reproduction start position, a play item and a sub-path corresponding to the designated position are selected.

As described with reference to Figs. 4 and 5, the play item functions as reproduction designation information of the main clip storing the image, and the sub-path functions as reproduction designation information of the sub-clip storing audio data or subtitle data which is a sub-content.

Next, in Step S303, a clip file which is designated by the selected play item and sub-path is acquired, and in Step S304, a reproduction process is executed.

In Step S305, it is determined whether there are the next play item and sub-path or not. When there are no next play item and sub-path, the determination result in Step S305 is No, and the content reproduction process ends.

When there are the next play item and sub-path, the determination result in Step S305 is YES. The process returns to Step S302 and the next play item and sub-path are selected to continue the process in Step S303 and the subsequent processes.

In this manner, due to the using of the play item which is reproduction designation information of the main clip storing the image and the sub-path which is reproduction designation information of the sub-clip storing the audio data or the subtitle data which is a sub-content in parallel, the process of reproducing the image and the audio (or subtitle) is executed as described with reference to Fig. 4.

### [9. Origin Determination Processing Sequence based on Illegally Distributed Content in Server]

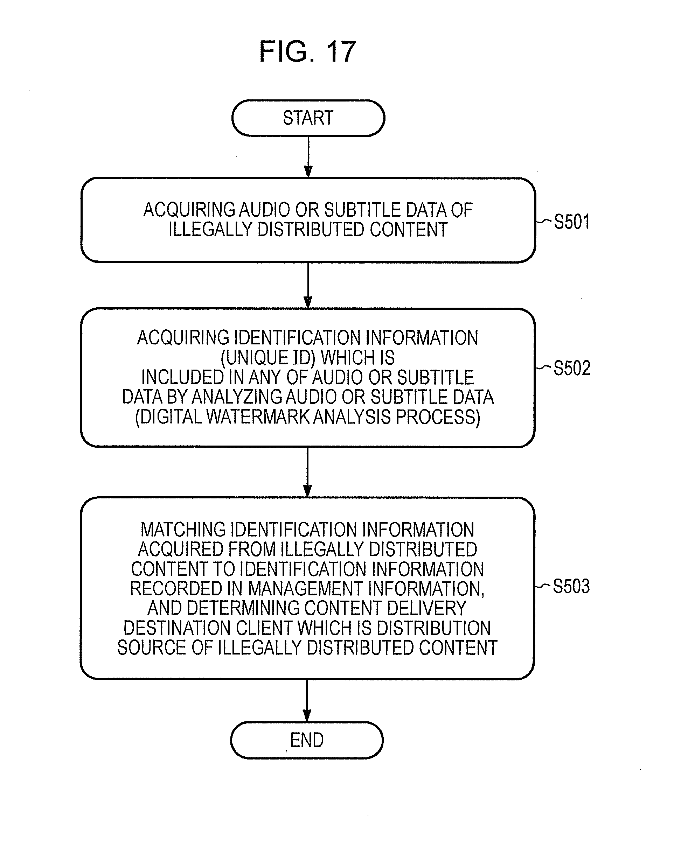

Next, an origin determination processing sequence which is executed when an illegally distributed content is found will be described with reference to the flowchart shown in Fig. 17.

The process according to the flow shown in Fig. 17 is, for example, a process which is executed in the data processing portion of the server by a service provider or the like executing the delivery of the content.

First, in Step S501, audio data (or subtitle data) of an illegally distributed content is acquired.

The illegally distributed content is, for example, a content which is set to be freely downloadable from a site to which anyone on the network can perform access, a copy content recorded on a disk which is illegally distributed, or the like.

Next, in Step S502, the audio data (or subtitle data) is analyzed to acquire identification information (unique ID) which is included in the audio data (or subtitle data) (digital watermark analysis process).

In this digital watermark analysis process, when an error correction code, an alteration verification value and the like are recorded as described with reference to Figs. 8 and 9, an error correction process and an alteration verification process using these pieces of data are executed, and then the identification information which is a unique ID is read.

Next, in Step S503, the identification information acquired from the illegally distributed content is matched to identification information (unique ID) recorded in management information, and a distribution source of the illegally distributed content, that is, a client who delivered the content is determined.

The management information is the management information shown in Fig. 10 or 13 described above.

In the flow shown in Fig. 17, only the example of the process of analyzing the digital watermark data in the audio data (or subtitle data) is described. However, as described with reference to Figs. 11 to 13, regarding the audio data (or subtitle data), different combinations of encryption keys which are applied in the unit of segment can be provided to the respective clients.

When such a setting is used, on the basis of the illegally distributed key, the illegally distributed key and the information registered in the management information shown in Fig. 13 are matched to each other, and thus an origin of the illegally distributed key can be found.

### [10. Example of Hardware Configurations of Devices]

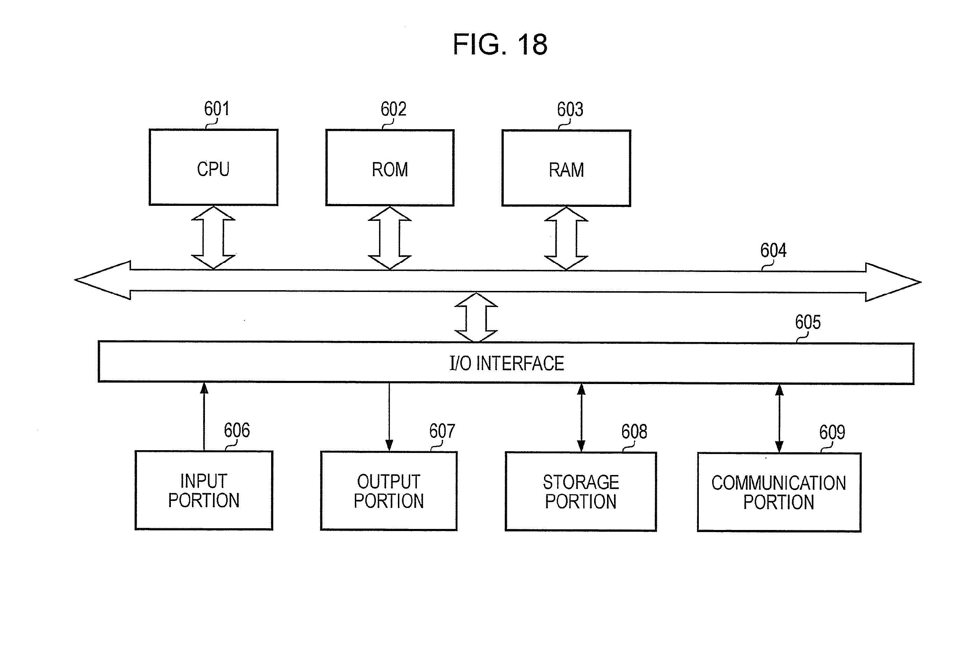

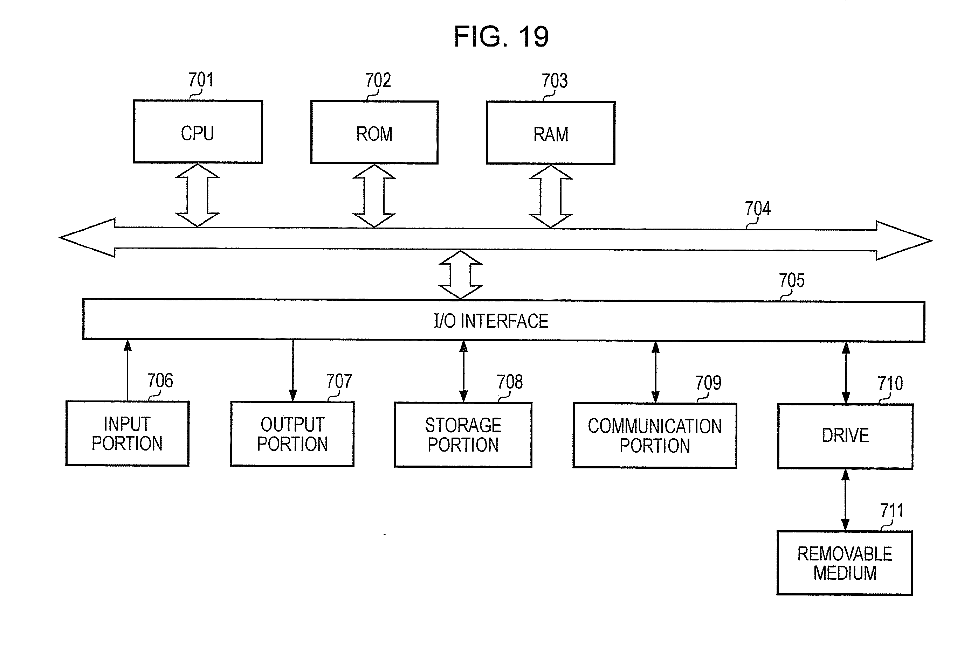

Finally, an example of the hardware configurations of the devices executing the above-described processes will be described with reference to Figs. 18 and 19.

First, an example of the hardware configuration of the server executing a content provision process will be described with reference to Fig. 18.

A Central Processing Unit (CPU) 601 functions as a data processing portion which executes various processes in accordance with a program stored in a Read Only Memory (ROM) 602 or a storage portion 608.

For example, the CPU 601 executes the process of generating a content having a digital watermark as identification information (unique ID) recorded therein, the content provision process, the process of creating and recording management information, and the like, which were described in the above-described embodiments. Data, programs to be executed by the CPU 601, and the like are appropriately stored in a Random Access Memory (RAM) 603. These CPU 601, ROM 602, and RAM 603 are connected to each other via a bus 604.

The CPU 601 is connected to an I/O interface 605 via the bus 604. An input portion 606 formed of various switches, a keyboard, a mouse, a microphone and the like and an output portion 607 formed of a display, a speaker and the like are connected to the I/O interface 605. The CPU 601 executes various processes in response to an instruction input from the input portion 606 and outputs process results to, for example, the output portion 607.

A storage portion 608 which is connected to the I/O interface 605 is formed of, for example, a hard disk or the like, and stores programs to be executed by the CPU 601 and various pieces of data. For example, the management information described with reference to Fig. 4 is also recorded thereon.

A communication portion 609 communicates with an external device via the network such as internet or local area network.

Next, an example of the hardware configuration of a client device executing a process of receiving and reproducing a content, and the like will be described with reference to Fig. 19.

A Central Processing Unit (CPU) 701 functions as a data processing portion which executes various processes in accordance with a program stored in a Read Only Memory (ROM) 702 or a storage portion 708.

For example, the CPU 701 executes the process of performing communication with the server, the process of recording data received from the server on the storage portion 708 (hard disk or the like), the process of reproducing data from the storage portion 708 (hard disk or the like), and the like, which were described in the above-described embodiments.

Data, programs to be executed by the CPU 701, and the like are appropriately stored in a Random Access Memory (RAM) 703. These CPU 701, ROM 702, and RAM 703 are connected to each other via a bus 704.

The CPU 701 is connected to an I/O interface 705 via the bus 704. An input portion 706 formed of various switches, a keyboard, a mouse, a microphone and the like and an output portion 707 formed of a display, a speaker and the like are connected to the I/O interface 705. The CPU 701 executes various processes in response to an instruction input from the input portion 706 and outputs process results to, for example, the output portion 707.

A storage portion 708 which is connected to the I/O interface 705 is formed of, for example, a hard disk or the like, and stores programs to be executed by the CPU 701 and various pieces of data. A communication portion 709 performs communication with an external device via the network such as internet or local area network.

A drive 710 which is connected to the I/O interface 705 drives a removable medium 711 such as a magnetic disk, an optical disc, a magnetic optical disc or a semiconductor memory and acquires various pieces of data such as recorded contents and programs.

The present disclosure was described in detail as above with reference to the specific embodiments. However, it is obvious that those skilled in the art may make modifications and substitutions in the embodiments without departing from the gist of the present disclosure. That is, the present disclosure is disclosed in the form of an example and is not interpreted in a limited manner. The claims of the present disclosure may be reference to judge the gist of the present disclosure.

In addition, the above-described series of processes can be executed by a hardware, a software, or a combination thereof. When the processes are executed by a software, a program having a processing sequence recorded therein can be installed and executed in a memory in a computer embedded in a dedicated hardware, or in a general-purpose computer capable of executing various processes. For example, the program can be recorded in advance on a recording medium. Other than installation in a computer from the recording medium, the program can be received via the network such as Local Area Network (LAN) or internet and installed in a recording medium such as a built-in hard disk.

The various processes described in the present disclosure may be not only executed time-sequentially in accordance with the description, but also executed in parallel or individually in accordance with the need or the processing capacity of a device which executes the processes. In addition, the system in the present disclosure has a logical collective configuration of a plurality of devices, and the respective constituent devices may not be disposed in the same housing.

As described above, according to the configuration of an embodiment of the present disclosure, a configuration is provided in which from an illegally distributed content, the origin thereof can be verified. A sub-content in which identification information of a content delivery client is recorded as, for example, a digital watermark in audio data or subtitle data, and a main content formed of image data which is reproduced together with the audio or the subtitle as the sub-content are generated and provided to the client. Furthermore, management information in which the identification information recorded in the sub-content is associated with client information of the content provision destination is generated to perform the management. When an illegally distributed content is found, the identification information recorded in the audio or the subtitle which is included in the illegally distributed content is analyzed and matched to data registered in the management information, and thus the delivery source thereof can be determined.

The present disclosure contains subject matter related to that disclosed in Japanese Priority Patent Application JP 2010-209734 filed in the Japan Patent Office on September 17, 2010.

It should be understood by those skilled in the art that various modifications, combinations, sub-combinations and alterations may occur depending on design requirements and other factors insofar as they are within the scope of the appended claims or the equivalents thereof.

## Claims

1. An information processor comprising:
a data processing portion which generates a content for delivery to a client,
wherein the data processing portion generates and provides a sub-content in which identification information of a content delivery client is recorded in audio data or subtitle data and a main content formed of image data which is reproduced together with the audio data or the subtitle data to the client, and generates and records management information in which the identification information recorded in the sub-content is associated with client information of the content provision destination in a storage portion.

2. The information processor according to Claim 1,
wherein the data processing portion generates a sub-content in which identification information is recorded as digital watermark data in audio data or subtitle data.

3. The information processor according to Claim 1,
wherein the data processing portion acquires identification information which is included in audio data or subtitle data by a process of analyzing the audio data or the subtitle data included in a distributed content, and specifies a client as a content delivery destination by a process of matching the acquired identification information to information registered in the management information.

4. The information processor according to Claim 1,
wherein the data processing portion generates and provides a playlist file as a reproduction control information file for reproduction of the main content and the sub-content in parallel.

5. The information processor according to Claim 1,
wherein the data processing portion holds a plurality of different digital watermark-recorded contents in which digital watermark data different in the unit of segment which is partition data of audio data or subtitle data is recorded, and selects a different combination of segments in the unit of delivery process to the client from the plurality of different digital watermark-recorded contents to generate a sub-content formed of audio data or subtitle data in which a digital watermark data row in the unit of segment which is client identification information is set.

6. The information processor according to Claim 1,
wherein the data processing portion holds a plurality of different encrypted contents each formed of encrypted segments to which an encryption key different in the unit of segment which is partition data of the content is applied, and selects a combination of segments different in the unit of delivery process to the client from the plurality of different encrypted contents to provide the combination of segments to the client.

7. The information processor according to Claim 6,
wherein the data processing portion generates and records management information in which key information of the encryption key applied to the encrypted content which is provided to the client is associated with client information of the content provision destination in the storage portion.

8. The information processor according to Claim 7,
wherein the data processing portion specifies a client as a destination of the delivery of the content and the key by acquiring information on the distributed key and matching the acquired key information to information registered in the management information.

9. An information processor comprising:
a data processing portion which executes a content reproduction process,
wherein the data processing portion acquires a sub-clip file storing a sub-content in which identification information of a content delivery client is recorded in audio data or subtitle data and a main clip file storing a main content formed of image data which is reproduced together with the audio data or the subtitle data, and applies a playlist file which is a reproduction control information file for execution of a process of reproducing the main clip file and the sub-clip file in parallel to reproduce the image data and the audio data or the subtitle data in parallel.

10. An information processing method which is executed in an information processor, the method comprising:
generating a sub-content in which identification information of a content delivery client is recorded in audio data or subtitle data and a main content formed of image data which is reproduced together with the audio data or the subtitle data by a data processing portion;
providing the sub-content and the main content to the client;
generating management information in which the identification information recorded in the sub-content is associated with client information of the content provision destination; and
storing the management information in a storage portion.

11. A program enabling an information processor to execute information processing,
wherein the program allows a data processing portion to generate and provide a sub-content in which identification information of a content delivery client is recorded in audio data or subtitle data and a main content formed of image data which is reproduced together with the audio data or the subtitle data to the client, and to generate and record management information in which the identification information recorded in the sub-content is associated with client information of the content provision destination in a storage portion.
